# EUROPÄISCHE PATENTSCHRIFT

(11) **EP 3 350 580 B1**
(45) Veröffentlichungstag und Bekanntmachung des Hinweises auf die Patenterteilung: **03.12.2025**
(21) Anmeldenummer: 16770722.3
(22) Anmeldetag: 15.09.2016
(51) Int. Cl.: G01N 21/88, G01N 21/64, G01N 21/91, F21V 1/00

(54) **VORRICHTUNG ZUR EMISSION ELEKTROMAGNETISCHER STRAHLUNG, INSBESONDERE UV-STRAHLUNG**
DEVICE FOR EMITTING ELECTROMAGNETIC RADIATION, IN PARTICULAR UV RADIATION
DISPOSITIF D'ÉMISSION DE RAYONNEMENT ÉLECTROMAGNÉTIQUE, EN PARTICULIER DE RAYONNEMENT UV

(30) Priorität: 15.09.2015 WO PCT/EP2015/071140; 23.10.2015 DE 102015118175
(43) Veröffentlichungstag der Anmeldung: 25.07.2018
(73) Patentinhaber: Breit, Marc, 66271 Kleinblittersdorf (DE)
(72) Erfinder: Breit, Marc, 66271 Kleinblittersdorf (DE)
(74) Vertreter: Patentanwälte Bernhardt / Wolff Partnerschaft mbB
(86) Internationale Anmeldenummer: PCT/EP2016/071833
(87) Internationale Veröffentlichungsnummer: WO 2017/046249

(56) Entgegenhaltungen:
- EP-A1- 1 623 213
- DE-A1- 10 326 369
- DE-A1- 102004 043 295
- DE-A1- 102006 004 995
- DE-B3- 102009 029 930
- US-A- 6 132 072
- US-A1- 2007 081 210
- US-A1- 2008 044 178
- US-A1- 2012 105 228
- US-A1- 2014 225 514
- US-B2- 8 616 722

## Beschreibung

Die Erfindung betrifft eine Vorrichtung zu Emission elektromagnetischer Strahlung, insbesondere UV-Strahlung, die zumindest ein Strahlungsmittel aufweist, das durch zumindest eine Leuchtdiode, vorzugsweise durch mehrere Leuchtdioden, gebildet ist, die lediglich Strahlung in nicht sichtbaren Wellenlängen emittiert, wobei die Vorrichtung eine Einrichtung zur Erkennung eines Funktionsfehlers der Leuchtdiode umfasst.

Aus der DE 10 2004 043 295 B4, der EP 1 623 213 B1 bzw. der WO 2004/097385 A1 und der US 8,616,722 B2 sind Leuchten bekannt, die ultraviolette Strahlung emittierende LEDs aufweisen. Sie werden zur visuellen Inspektion von Werkstückoberflächen, insbesondere zur Detektion von Verunreinigungen, zur Eindringprüfung sowie zur fluoreszierenden Magnetpulverprüfung benutzt.

Bei der visuellen Inspektion, insbesondere bei Prüfung von Werkstückoberflächen nach dem fluoreszierenden Eindringverfahren, werden durch ein fluoreszierendes Mittel Defekte auf Werkstückoberflächen durch Anregung mit Ultraviolettstrahlung sichtbar gemacht. Die Inspektion wird meist im Dunkeln, bei weniger als 20 Lux Umgebungsbeleuchtungsstärke durchgeführt, weil der Mensch beim mesopischen Sehen (Dämmerungssehen) und skotopischen Sehen (Nachtsehen) höhere Kontrastempfindlichkeit in der visuellen Wahrnehmung hat und bei hohem Kontrast zwischen der zu untersuchende Oberfläche und den angeregten Fluoreszenzen besser geprüft werden kann.

Aus der DE 10 2009 029 930 B3 geht ein Verfahren zur Erkennung eines Ausfalls zumindest einer LED hervor.

DE 103 26 369 A1 beschreibt einen Leuchttisch zur Auswertung von Materialproben.

Aus der US 2012/105228 A1 ist ein Warnsystem für Leuchtvorrichtungen bekannt. Zu überwachende Leuchtvorrichtungen können unterschiedliche Leuchtmittel, insbesondere LED, aufweisen, die sowohl sichtbares als auch nicht sichtbares Licht emittieren können. Ferner weist das Warnsystem ein Detektionsmodul auf, das unterschiedliche Betriebsparameter der Leuchtvorrichtung und der Leuchtmittel erfasst. Gemäß einer Ausführungsform wird die Leuchtvorrichtung bei Erkennung einer gefährlichen Situation abgeschaltet. Eine solche gefährliche Situation kann eine überhöhte Temperatur der Leuchtvorrichtung sein.

Der Erfindung liegt die Aufgabe zugrunde, eine Vorrichtung der eingangs genannten Art zu schaffen, bei der sichergestellt ist, dass sie nur verwendet wird, wenn sie fehlerfrei funktioniert.

Eine diese Aufgabe lösende Vorrichtung ist, wie in Anspruch 1 definiert, dadurch gekennzeichnet, dass die Vorrichtung dazu eingerichtet ist, bei Erkennung des Funktionsfehlers mittels der Erkennungseinrichtung die gesamte Vorrichtung oder zumindest die zumindest eine Leuchtdiode automatisch außer Betrieb zu setzen.

In einer bevorzugten Ausführungsform der Erfindung ist die zumindest eine Leuchtdiode dazu vorgesehen, lediglich UV-Strahlung (Wellenlängenbereich 200 bis 400 nm) oder/und IR-Strahlung (Wellenlängenbereich 780 bis 50 µm) zu emittieren. In einer Ausführungsform außerhalb der beanspruchten Erfindung kann eine Leuchtdiode dazu vorgesehen sein, blau-violette Strahlung (Wellenlängenbereich 380 bis 490 nm) zu emittieren.

Anders als bei den herkömmlicherweise zur Emission von UV-Strahlung verwendeten Quecksilberdampflampen, bei denen ein Funktionsfehler verhältnismäßig einfach erkennbar ist, da sie entweder korrekt funktionieren oder voll- ständig ausfallen, tritt bei Leuchtdioden immer wieder das Problem auf, dass sich ihre Strahlungsintensität ändert, z.B. dass die Strahlungsintensität schwankt oder dass die Leuchtdioden flackern, sodass sich die Erfindung für Vorrichtungen mit Leuchtdioden als besonders vorteilhaft erweist.

Darüber hinaus kann, wenn die Vorrichtung als das Strahlungsmittel mehrere der Leuchtdioden aufweist, auch ein Funktionsfehler einzelner oder mehrerer der Leuchtdioden, der ebenfalls zur Verringerung der Leuchtintensität führt, erkannt werden.

Die Vorrichtung ist zweckmäßigerweise mit einer Steuer- und/oder Regelungseinrichtung versehen, die die Vorrichtung bzw. das Strahlungsmittel bei Funktionsfehlererkennung ausschaltet.

Wird beispielsweise in einem von mehreren Schaltkreisen, über die das Strahlungsmittels gespeist wird und in denen vorzugsweise jeweils eine oder mehrere LEDs angeordnet sind, ein Funktionsfehler festgestellt, wird nicht nur der eine, sondern es werden sämtliche Schaltkreise so geschaltet, dass das Strahlungsmittel als Ganzes nicht mehr strahlen kann.

Vorteilhaft wird dadurch ausgeschlossen, dass mit einer nicht voll funktionsfähigen Vorrichtung weitergearbeitet werden kann. Fehler bei der Prüfung, insbesondere bei der visuellen Prüfung, werden vermieden.

Mit der Erfindung wird das Problem behoben, dass bei der Benutzung der bekannten Vorrichtungen nicht ohne weiteres auffällt, wenn das die nicht sichtbare Lichtstrahlung emittierende Strahlungsmittel nicht korrekt funktioniert, da das menschliche Auge z.B. eine verringerte Leuchtintensität, Änderungen der Wellenlängen der Strahlung ein Flackern oder einen teilweisen Ausfall des Strahlungsmittels oder eine Veränderung einer Wellenlänge oder eines Wellenlängenbereich, mit dem das Strahlungsmittel strahlt, nicht unmittelbar wahrnimmt.

Durch die Erkennungseinrichtung, mittels derer sich die Funktionsfehler auffinden lassen, wird die Möglichkeit geschaffen, bei Fehlfunktionen geeignete Maßnahmen zu ergreifen. Dadurch lässt sich vermeiden, dass bei der Benutzung der Vorrichtung aufgrund des Funktionsfehlers Mängel auftreten, z.B. dass Defekte übersehen werden oder, wenn die Vorrichtung beispielsweise zur Trocknung von Gegenständen oder Aushärtung von Materialien verwendet wird, die Trocknung bzw. die Aushärtung nicht wie vorgesehen erreicht wird.

In einer Ausgestaltung der Erfindung ist die Erkennungseinrichtung zur fortwährenden Überwachung des Strahlungsmittels auf Betriebsfehler eingerichtet, wobei die Vorrichtung vorzugsweise in regelmäßigen zeitlichen Abständen, bspw. jede 10 ms, auf Funktionsfehler überprüft wird. Vorteilhaft können dadurch die Funktionsfehler auch dann aufgefunden werden, wenn sie erst nach erfolgter Benutzungsaufnahme der Vorrichtung, insbesondere während der Benutzung der Vorrichtung, auftreten.

Zweckmäßigerweise ist die Vorrichtung, vorzugsweise die Steuer- und/oder Regelungseinrichtung dazu eingerichtet, den Funktionsfehler bei Erkennung anzuzeigen, beispielsweise durch ein optisches, taktiles oder akustisches Warnsignal. Vorstellbar wäre, bei Anzeige der Fehlfunktion, beispielsweise über einen Bildschirm, Informationen anzuzeigen, die die Fehlfunktion charakterisieren. Zum Beispiel könnte angezeigt werden, welche der Leuchtdioden nicht korrekt funktioniert, oder/und die Art der Fehlfunktion wie Flackern, Ausfall oder dergleichen angezeigt werden. Die Erkennungseinrichtung kann dazu vorgesehen sein, bei Erkennung eines Funktionsfehlers ein Signal an die Steuer- und/oder Regelungseinrichtung zu senden.

In einer weiteren Ausgestaltung der Erfindung ist die Erkennungseinrichtung für die Überwachung zur Messung einer an dem Strahlungsmittel abfallenden elektrischen Spannung, zur Messung eines durch das Strahlungsmittel fließenden elektrischen Stroms, zur Messung einer durch das Strahlungsmittel erzeugten Erwärmung oder einer Temperatur der Vorrichtung, vorzugsweise in der Nähe des Strahlungsmittels, zur Messung einer Intensität, mit der das Strahlungsmittel strahlt und/oder zur Messung der Wellenlänge oder/und des Wellenlängenbereichs von Strahlung, die von dem Strahlungsmittel emittiert wird, eingerichtet.

Sollten mehrere der Strahlungsmittel in einem gemeinsamen Schaltkreis angeordnet und verbunden sein, könnte der Spannungsabfall bzw. der Strom auch für den gesamten Schaltkreis gemessen werden.

Zur Messung der Erwärmung weist die Erkennungseinrichtung zweckmäßigerweise einen Temperatursensor, vorzugsweise einen Platin-Messwiderstand, auf, der an oder in der Nähe des Strahlungsmittels angeordnet ist. Es hat sich als besonders geeignet erwiesen, den Temperatursensor auf einem Strahlungsmittelträger der Vorrichtung, der vorzugsweise durch einen metallischen Kühlkörper gebildet ist oder mit dem Kühlkörper verbunden ist, anzuordnen.

Die Erkennungseinrichtung ist zur Messung der Intensität oder/und zur Messung der Wellenlänge bzw. des Wellenlängenbereichs der Strahlung zweckmäßigerweise mit einem Strahlungssensor, vorzugsweise einer Fotozelle, einer Fotodiode, einem Fototransistor oder einem CMOS- oder CCD-Sensor versehen.

Zweckmäßigerweise ist das Strahlungsmittel vorzugsweise mit einem Filter zum Einstellen des jeweiligen Wellenlängenbereichs versehen.

In einer weiteren Ausgestaltung der Erfindung weist die Vorrichtung zusätzlich zu dem Strahlungsmittel ein Mittel zur Emission von sichtbarem Licht, vorzugsweise von Weißlicht, auf. Zwischen einer Beleuchtung mit dem sichtbaren Licht und dem unsichtbaren Licht kann hin- und hergestellt werden, um bei der visuellen Inspektion zwischen verschiedenen Ansichten unter Weißlicht und sichtbarem Licht wechseln zu können.

Zweckmäßigerweise ist die Vorrichtung dazu eingerichtet, bei Erkennung des Funktionsfehlers mittels der Erkennungseinrichtung neben dem Strahlungsmittel auch das Mittel zur Emission von sichtbarem Licht automatisch außer Betrieb zu setzen.

Die Vorrichtung ist vorzugsweise dazu eingerichtet, eine Intensität, mit der das Strahlungsmittel strahlt, unabhängig von einer Intensität, mit der das Emissionsmittel für sichtbares Licht strahlt, zu verändern. Zweckmäßigerweise sind die Intensitäten einzelner oder sämtlicher der Strahlungsmittel separat verstellbar.

In einer Ausgestaltung der Erfindung ist die Vorrichtung dazu eingerichtet, die Intensität zumindest eines der Strahlungsmittel zu vergrößern oder zu verringern und gleichzeitig die Intensität zumindest eines anderen der Strahlungsmittel konstant zu halten oder entgegengesetzt zum erstgenannten Strahlungsmittel zu verringern bzw. zu vergrößern.

Durch solche Intensitätsänderungen kann zum einen ein Strahlungsmittel zu dem anderen hinzugestellt werden und zum anderen von einem Strahlungsmittel auf das andere und damit von einer Bestrahlung in einem Wellenlängenbereich auf eine andere überblendet werden.

Zweckmäßigerweise ist die genannte Steuer- und/oder Regelungseinrichtung ferner zur Verstellung der Intensität, mit der das Strahlungsmittel und ggf. die Emissionseinrichtung strahlen, vorgesehen. Die Steuer- und/oder Regelungseinheit umfasst vorzugsweise zumindest eine Konstantstromsteuerung, die auf Basis von elektrischen und elektronischen Schalt- und Regelkreisen funktioniert. Das Strahlungsmittel, insbesondere die LED, können dadurch besonders effizient betrieben werden, weil mittels der Konstantstromsteuerung der Betriebsstrom des jeweiligen Strahlungsmittels, insbesondere der LED oder des LED-Schaltkreises, gemessen und diesen in engen Grenzen konstant gehalten werden kann. Zweckmäßigerweise kann die Konstantstromsteuerung den Konstantstrom aus einer Wechsel- und/oder Gleichspannung erzeugen. Die Intensität, mit der die LED strahlt, wird vorzugsweise unter Verwendung von Pulsweitenmodulation geändert. Die Vorrichtung weist dazu bevorzugt eine Pulsweitenmodulationssteuerung auf. Alternativ oder ergänzend dazu könnte die Stromstärke geändert werden.

Ferner kann die Steuer- und/oder Regelungseinrichtung eine Regelung aufweisen, die die Leistung der Vorrichtung oder einzelner Teile der Vorrichtung temperaturabhängig reduzieren oder abschalten kann, um die Vorrichtung, insbesondere die Strahlungsmittel und/oder die Steuer- und/oder Regelungseinrichtung, vor Überhitzung zu schützen. Zur Kühlung könnte die Vorrichtung ergänzend oder alternativ dazu mit einem Lüfter versehen sein, der vorzugsweise mittels der Steuer- und/oder Regelungseinrichtung steuer- und/oder regelbar ist. Zweckmäßigerweise ist die Vorrichtung ferner zur Erkennung einer Fehlfunktion und entsprechender Überwachung, vorzugsweise mittels der Erkennungs- oder der Steuer- und/oder Regelungseinrichtung, eingerichtet.

Zweckmäßigerweise ist die Vorrichtung zur Anzeige eines Betriebszustands des Strahlungsmittels, sofern mehrere der Strahlungsmittel vorgesehen sind, zur Anzeige der Betriebszustände jedes der Strahlungsmittel eingerichtet. Alternativ oder ergänzend dazu kann vorgesehen sein, dass die Vorrichtung anzeigt, ob das jeweilige Strahlungsmittel Strahlung emittiert oder nicht, d.h. insbesondere ob es an- oder ausgeschaltet ist.

In einer weiteren Ausführungsform der Erfindung umfasst die Vorrichtung eine Justiereinrichtung, die dazu vorgesehen ist, die Intensität der durch das jeweilige Strahlungsmittel emittierte Strahlung in Abhängigkeit von einer Temperatur der Vorrichtung zu regeln. Vorteilhaft kann dadurch eine bei steigender Temperatur auftretende Reduzierung der Intensität ausgeglichen werden.

Die Vorrichtung umfasst zweckmäßigerweise zumindest ein Gehäuse, das vorzugsweise zur Aufnahme des Strahlungsmittels vorgesehen ist, zumindest ein Bedienelement, zumindest ein optisches System, das vorzugsweise zumindest eine Linse aufweist, und/oder zumindest ein Kühlmittel, vorzugsweise einen Lüfter, einen Wärmetauscher und/oder eine Kühlplatte.

In einer Ausgestaltung der Erfindung ist die Vorrichtung in einem mobilen und/oder stationären Einsatz nutzbar. Sie kann eine Hand- und/oder eine Standvorrichtung oder eine, beispielsweise an einer Halterung oder einer Wand fest installierbare Vorrichtung sein.

Während in einer besonders bevorzugten Ausführungsform der Erfindung eine Einrichtung zur Bedienung der Vorrichtung in das Gehäuse integriert ist, wäre auch vorstellbar, sie außerhalb des Gehäuses vorzusehen, wobei die Vorrichtung vorzugsweise zumindest ein Gehäuse für die Strahlungsmittel, zumindest einen Schaltschrank oder ein Schaltgehäuse und/oder zumindest ein Bedienelement umfasst. Zweckmäßigerweise weist die Bedienungseinrichtung zumindest ein von Hand oder mit dem Fuß betätigbares Bedienelement auf, mittels die Intensität zumindest einer der Strahlungsmittel veränderbar ist.

Die Stromversorgung der Vorrichtung kann durch zumindest eine externe oder integrierte Gleich- und/oder Wechselstromquelle erfolgen.

Die Erfindung wird nachfolgend anhand eines Ausführungsbeispiels und der beiliegenden, sich auf das Ausführungsbeispiel beziehenden Zeichnungen näher erläutert. Es zeigen:
- Fig. 1: eine erfindungsgemäße Vorrichtung im seitlichen Schnitt,
- Fig. 2: eine Vorderansicht der Vorrichtung nach Fig. 1, und
- Fig. 3: eine Rückansicht der Vorrichtung nach Fig. 1.

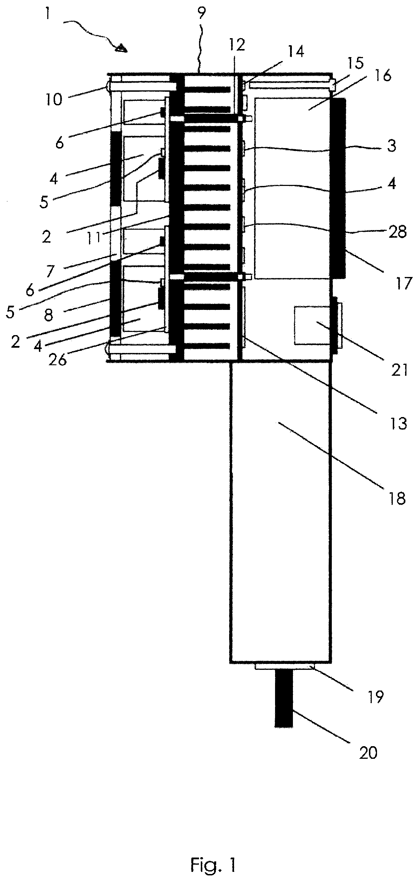

Eine in den Figuren 1 bis 3 dargestellte erfindungsgemäße Vorrichtung 1 weist acht UV-LEDs 2, die zur Emission von UV-Strahlung (Wellenlängenbereich 200 - 400 nm) vorgesehen sind, und acht Weißlicht-LEDs 6 auf, die zur Emission von Weißlicht (Wellenlängenbereich 380 - 780 nm), vorgesehen sind, auf. Vor den LEDs 2,6 sind zur Beeinflussung jeweiliger, von den LEDs ausgehender Strahlengänge optische Bauelemente 4 angeordnet. In Strahlungsrichtung gesehen hinter den optischen Bauelementen 4 ist eine Frontscheibe 7 angeordnet, die über Befestigungsmittel 10 mit einem Gehäuse 9 der Vorrichtung 1 verbunden ist und die für jede der UV-LEDs 2 mit Filtern 8 versehen ist.

Die LEDs 2,6 sind auf eine Trägerplatine 26 aufgelötet, die auf einem Kühlkörper 11 angeordnet ist. Der Kühlkörper 11 ist über Abstandbolzen 12 mit einer Leiterplatte 13 verbunden, die mehrere elektronische Bauteile, z.B. Mikrocontroller trägt. Auf der Leiterplatte 13 ist ferner eine Anzeigen-LED 14 angeordnet, die wie unten näher erläutert zur Anzeige eines Betriebszustandes der Vorrichtung 1 vorgesehen ist. Zwischen einer Rückseite des Gehäuses 9 und der Anzeigen-LED 14 ist ein Lichtleiter 15 angeordnet, mittels dessen Strahlung von der Anzeigen-LED 14 zu der Rückseite geleitet werden kann.

Unmittelbar neben jeder der UV-LEDs 2 ist auf die Trägerplatine 26 ein Temperatursensor, beispielsweise ein Platin-Messwiderstand angeordnet, der die Temperatur misst, um eine durch die jeweiligen UV-LEDs 2 hervorgerufene Erwärmung zu bestimmen.

Ferner kann auf der Innenseite der Frontscheibe 7, z.B. etwa schräg gegenüberliegend jeder der UV-LEDs 2 ein (hier nicht gezeigter) optischer Sensor, z.B. ein CCD-Sensor, angeordnet sein.

Die elektronischen Bauteile bilden eine Regelungs- und/oder Steuerungseinrichtung 4, die zur Steuerung und/oder Regelung der Intensitäten, mit denen die LEDs 2,6 strahlen, eingerichtet ist. Die Steuer- und Regelungseinrichtung 4 ist ferner dazu vorgesehen, Intensitäten, mit denen die UV-LEDs 2 und die Weißlicht-LEDs 6 strahlen, mittels Pulsweitenmodulation oder/und durch Änderung des vorgesehenen Stroms separat voneinander zu verändern.

Die elektronischen Bauteile bilden ferner eine Erkennungseinrichtung 3, die zur Erkennung von Funktionsfehlern beim Betrieb der Vorrichtung 1 mit dem Temperatursensor 5 verbunden ist.

Die Erkennungseinrichtung 3 ist ferner derart geschaltet, dass sie jede der an den einzelnen UV-LEDs 2 abfallenden Spannungen sowie Ströme, die durch die UV-LEDs 2 fließen, ermitteln kann, wobei ggf. auf Informationen, die der Steuer- und Regelungseinrichtung vorliegen, zurückgegriffen wird. Ist ein UV-LED-Kreis vorgesehen, der mehrere UV-LEDs 2 aufweist, kann der Spannungsabfall oder/und der Strom für den gesamten UV-LED-Kreis gemessen werden.

Tritt bei einer der UV-LEDs 2 ein Funktionsfehler auf, beispielsweise Flackern, eine verringerte Leuchtintensität oder ein vollständiger Ausfall der UV-LEDs 2, erkennt die Erkennungseinrichtung 3 dies daran, dass durch die jeweilige UV-LED 2 ein geringerer oder kein Strom fließt und/oder sich der Spannungsabfall an der UV-LED ändert. Alternativ oder ergänzend dazu kann vorgesehen sein, dass die Erkennungseinrichtung 3 mit den Temperatursensoren 5 verbunden ist und den Funktionsfehler daran erkennt, dass eine vergleichsweise geringe Temperatur oder eine Temperaturänderung gemessen wird.

Ferner kann die Erkennungseinrichtung 3 alternativ oder ergänzend zur Strom- und/oder Spannungsmessung oder/und zur Temperaturmessung mittels des optischen Sensors dazu eingerichtet sein, eine Intensität der von den UV-LEDs 2 emittierten Strahlung und ggf. deren Wellenlänge oder Wellenlängenbereiche zu bestimmen.

Die Erkennungseinrichtung 3 ist derart geschaltet, dass die Vorrichtung 1 bei Auffinden eines Funktionsfehlers der UV-LEDs 2 ein Signal an die Steuerungs- und/oder Regelungseinrichtung 4 gibt und diese daraufhin veranlasst, sämtliche UV-LEDs 2 außer Betrieb zu setzen und ggf. zusätzlich ein den Funktionsfehler anzeigendes, vorzugsweise optisches, taktiles oder akustisches, Warnsignal zu geben. Darüber hinaus kann sie dazu vorgesehen sein, den Funktionsfehler, beispielsweise durch Anzeige eines Codes, den Funktionsfehler über die Anzeigen-LED 14 oder eine andere Anzeigeeinrichtung, zu charakterisieren.

Sind in der Vorrichtung 1 für die UV-LEDs 2 verschiedene Schaltkreise vorgesehen und es wird nur in einem oder gleichzeitig in einzelnen der Schaltkreise ein Funktionsfehler aufgefunden, werden sämtliche der Schaltkreise für die UV-LEDs 2 so geschaltet, dass die UV-LEDs 2 nicht mehr strahlen können.

Ferner könnte Auffinden eines Funktionsfehlers durch die Steuerungs- und/oder Regelungseinrichtung 4 die gesamte Vorrichtung 1 außer Betrieb gesetzt werden.

Darüber hinaus ist auf der Leiterplatte 13 durch die elektronischen Bauteile eine Justiereinrichtung 28 gebildet, die dazu vorgesehen ist, Leistungen, mit denen die LEDs 2,6 strahlen, in Abhängigkeit einer Temperatur der Vorrichtung 1 zu regeln, um bei Erwärmung der Vorrichtung 1 auftretende Änderung der Stromstärke ausgleichen zu können, um die jeweiligen Intensitäten auf die vorgesehenen Werte zu regeln.

Zur Kühlung der Vorrichtung 1 ist ein Lüfter 16 vorgesehen, mittels dessen Luft auf die Leiterplatte 13 und den Kühlkörper 11 geblasen werden kann. Das Gehäuse 9 ist auf seiner Rückseite mit einem Lüftungsgitter 17 versehen, das zur Aufnahme eines Filters vorgesehen ist und durch welches die Luft mittels des Lüfters 16 angesaugt wird.

Die Vorrichtung 1 weist ferner einen Haltegriff 18 auf, an dessen unteren Ende über einen Zugentlaster 19 eine Leitung 20 geführt ist, über welche die Vorrichtung 1 mit Energie versorgt werden und ggf. gesteuert werden kann.

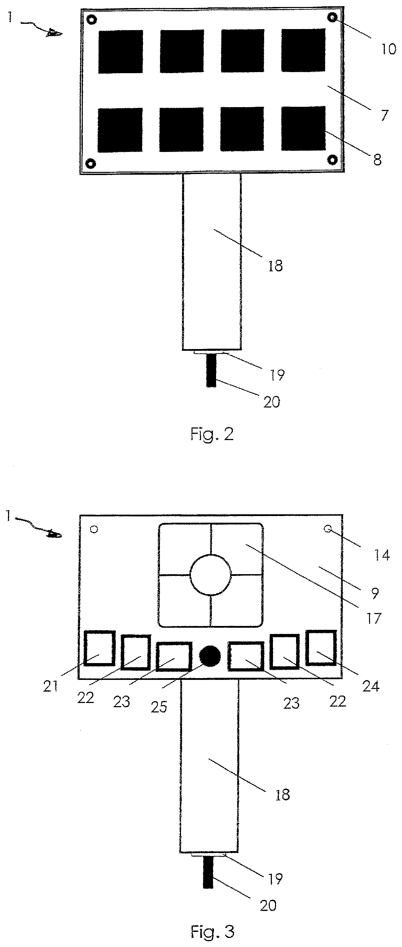

Wie insbesondere Fig. 3 zu entnehmen ist, ist die Vorrichtung 1 auf ihrer Rückseite mit Tastern 21,22,23,24 und einem Drehregler 25 versehen, die zur Steuerung von Intensitäten, mit denen die LEDs 2,6 leuchten, vorgesehen sind und die mit der Steuer- und/oder Regelungseinrichtung 4 zusammenwirken.

## Patentansprüche

1. Vorrichtung zur Emission elektromagnetischer Strahlung, insbesondere UV-Strahlung, die zumindest ein Strahlungsmittel (2) aufweist, das zumindest durch eine Leuchtdiode (2) gebildet ist, die lediglich Strahlung in nicht sichtbaren Wellenlängen emittiert, wobei die Vorrichtung (1) eine Einrichtung (3) zur Erkennung eines Funktionsfehlers der Leuchtdiode (2) umfasst,
**dadurch gekennzeichnet,**
**dass** die Vorrichtung (1) dazu eingerichtet ist, die Vorrichtung (1) oder zumindest die Leuchtdiode (2) bei Erkennung des Funktionsfehlers der Leuchtdiode (2) durch die Erkennungseinrichtung (3) automatisch außer Betrieb zu setzen.

2. Vorrichtung nach Anspruch 1,
**dadurch gekennzeichnet,**
**dass** das Strahlungsmittel (2) zur Emission von lediglich UV-Strahlung, blauvioletter Strahlung oder/und IR-Strahlung vorgesehen ist.

3. Vorrichtung nach Anspruch 1 oder 2,
**dadurch gekennzeichnet,**
**dass** das Strahlungsmittel (2) durch mehrere Leuchtdioden gebildet ist.

4. Vorrichtung nach einem der Ansprüche 1 bis 3,
**dadurch gekennzeichnet,**
**dass** die Erkennungseinrichtung (3) zur fortwährenden Überwachung des Strahlungsmittels (2) auf Funktionsfehler eingerichtet ist.

5. Vorrichtung nach einem der Ansprüche 1 bis 4,
**dadurch gekennzeichnet,**
**dass** die Vorrichtung (1) dazu vorgesehen ist, anzuzeigen, dass ein Funktionsfehler vorliegt.

6. Vorrichtung nach einem der Ansprüche 1 bis 5,
**dadurch gekennzeichnet,**
**dass** die Vorrichtung eine Einrichtung zur Messung (5) einer an dem Strahlungsmittel (2) abfallenden elektrischen Spannung eingerichtet ist.

7. Vorrichtung nach einem der Ansprüche 1 bis 6,
**dadurch gekennzeichnet,**
**dass** die Messeinrichtung (5) zur Messung eines durch das Strahlungsmittel (2) fließenden elektrischen Stroms eingerichtet ist.

8. Vorrichtung nach einem der Ansprüche 1 bis 7,
**dadurch gekennzeichnet,**
**dass** die Messeinrichtung (5) zur Messung einer durch das Strahlungsmittel (2) verursachten Erwärmung, zur Messung einer Intensität, mit der das Strahlungsmittel (2) strahlt, oder/und zur Messung der Wellenlänge oder/und des Wellenlängenbereichs der Strahlung, die von dem Strahlungsmittel (2) emittiert wird, eingerichtet ist.

9. Vorrichtung nach einem der Ansprüche 1 bis 8,
**dadurch gekennzeichnet,**
**dass** die Vorrichtung (1) zusätzlich zu dem Strahlungsmittel (2) eine Einrichtung (6) zur Emission von sichtbarem Licht, vorzugsweise von Weißlicht, umfasst, wobei die Vorrichtung (1) vorzugsweise dazu eingerichtet ist, eine Intensität, mit der das Strahlungsmittel (2) strahlt, unabhängig von einer Intensität, mit der die Emissionseinrichtung (6) strahlt, zu verändern.

10. Vorrichtung nach einem der Ansprüche 1 bis 9,
**dadurch gekennzeichnet,**
**dass** die Vorrichtung als Leuchte für die Inspektion von Werkstückoberflächen, vorzugsweise zur Detektion von Verunreinigungen, zur Eindringprüfung und/oder zur fluoreszierenden Magnetpulverprüfung, ausgestaltet ist.

11. Verfahren zum Betrieb einer Vorrichtung zur Emission elektromagnetischer Strahlung, insbesondere UV-Strahlung, die zumindest ein Strahlungsmittel (2) aufweist, das durch zumindest eine Leuchtdiode gebildet ist, die lediglich Strahlung in nicht sichtbaren Wellenlängen emittiert, wobei die Vorrichtung (1) mittels einer Erkennungseinrichtung (3) Funktionsfehler der Leuchtdiode (2) erkennt,
**dadurch gekennzeichnet,**
**dass** die Vorrichtung (1) oder zumindest die Leuchtdiode (2) bei Erkennung des Funktionsfehlers durch die Erkennungseinrichtung (3) automatisch außer Betrieb gesetzt wird.

12. Verfahren nach Anspruch 11,
**dadurch gekennzeichnet,**
**dass** die Vorrichtung das Vorliegen eines Funktionsfehler anzeigt.

13. Verwendung der Vorrichtung nach einem der Ansprüche 1 bis 10 zur, insbesondere visuellen, Inspektion von Werkstückoberflächen.

14. Verwendung nach Anspruch 13,
**dadurch gekennzeichnet,**
**dass** die Vorrichtung zur Detektion von Verunreinigungen, zur Eindringprüfung und/oder zur fluoreszierenden Magnetpulverprüfung benutzt wird.

## Claims

1. Device for emitting electromagnetic radiation, in particular UV radiation, which has at least one radiation means (2), which is formed by at least one light-emitting diode (2) that only emits radiation at invisible wavelengths, wherein the device (1) comprises an apparatus (3) for identifying a malfunction of the light-emitting diode (2),
**characterized in that**
the device (1) is configured to automatically shut down the device (1) or at least the light-emitting diode (2) upon identification of the malfunction of the light-emitting diode (2) by the identifying apparatus (3).

2. Device according to Claim 1,
**characterized in that**
the radiation means (2) is provided for emitting only UV radiation, blue-violet radiation or/and IR radiation.

3. Device according to Claim 1 or 2, **characterized in that**
the radiation means (2) is formed by multiple light-emitting diodes.

4. Device according to any one of Claims 1 to 3,
**characterized in that**
the identifying apparatus (3) is configured to continuously monitor the radiation means (2) for malfunctions.

5. Device according to any one of Claims 1 to 4,
**characterized in that**
the device (1) is intended to indicate that there is a malfunction.

6. Device according to any one of Claims 1 to 5,
**characterized in that**
the device comprises an apparatus (5) for measuring an electrical voltage dropping at the radiation means (2).

7. Device according to any one of Claims 1 to 6,
**characterized in that**
the measuring apparatus (5) is configured to measure an electrical current flowing through the radiation means (2).

8. Device according to any one of Claims 1 to 7,
**characterized in that**
the measuring apparatus (5) is configured to measure heat caused by the radiation means (2), to measure an intensity with which the radiation means (2) radiates, or/and to measure the wavelength or/and the wavelength range of the radiation emitted by the radiation means (2).

9. Device according to any one of Claims 1 to 8,
**characterized in that**
the device (1) comprises, in addition to the radiation means (2), an apparatus (6) for emitting visible light, preferably white light, wherein the device (1) is preferably configured to change an intensity with which the radiation means (2) radiates, regardless of an intensity with which the emitting apparatus (6) radiates.

10. Device according to any one of Claims 1 to 9,
**characterized in that**
the device is designed as a luminaire for inspecting workpiece surfaces, preferably for detecting contaminants, for penetrant testing and/or for fluorescent magnetic powder testing.

11. Method for operating a device for emitting electromagnetic radiation, in particular UV radiation, which has at least one radiation means (2), which is formed by at least one light-emitting diode that only emits radiation at invisible wavelengths, wherein the device (1) identifies a malfunction of the light-emitting diode (2) by means of an identifying apparatus (3),
**characterized in that**
the device (1) or at least the light-emitting diode (2) is automatically shut down when the malfunction is identified by the identifying apparatus (3).

12. Method according to Claim 11,
**characterized in that**
the device indicates the presence of a malfunction.

13. Use of the device according to any one of Claims 1 to 10 for, in particular visually, inspecting workpiece surfaces.

14. Use according to Claim 13,
**characterized in that**
the device is used for detecting contaminants, for penetrant testing and/or for fluorescent magnetic powder testing.

## Revendications

1. Dispositif d'émission d'un rayonnement électromagnétique, en particulier d'un rayonnement UV, comprenant au moins un moyen de rayonnement (2) formé par au moins une diode électroluminescente (2) émettant uniquement un rayonnement dans des longueurs d'onde non visibles, le dispositif (1) comprenant un organe (3) de détection d'un défaut de fonctionnement de la diode électroluminescente (2),
**caractérisé en ce que**
le dispositif (1) est conçu pour mettre automatiquement hors service le dispositif (1) ou au moins la diode électroluminescente (2) en cas de détection du défaut de fonctionnement de la diode électroluminescente (2) par l'organe de détection (3).

2. Dispositif selon la revendication 1,
**caractérisé en ce que**
le moyen de rayonnement (2) est prévu pour émettre uniquement un rayonnement UV, un rayonnement bleu-violet ou/et un rayonnement IR.

3. Dispositif selon la revendication 1 ou 2,
**caractérisé en ce que**
le moyen de rayonnement (2) est formé par plusieurs diodes électroluminescentes.

4. Dispositif selon l'une des revendications 1 à 3,
**caractérisé en ce que**
l'organe de détection (3) est conçu pour surveiller en permanence le moyen de rayonnement (2) afin de détecter des défauts de fonctionnement.

5. Dispositif selon l'une des revendications 1 à 4,
**caractérisé en ce que**
le dispositif (1) est prévu pour indiquer la présence d'un défaut de fonctionnement.

6. Dispositif selon l'une des revendications 1 à 5,
**caractérisé en ce que** le dispositif comprenant un organe (5) de mesure d'une tension électrique chutant aux bornes du moyen de rayonnement (2).

7. Dispositif selon l'une des revendications 1 à 6,
**caractérisé en ce que**
l'organe de mesure (5) est conçu pour mesurer un courant électrique circulant dans le moyen de rayonnement (2).

8. Dispositif selon l'une des revendications 1 à 7,
**caractérisé en ce que**
l'organe de mesure (5) est conçu pour mesurer un échauffement provoqué par le moyen de rayonnement (2), pour mesurer une intensité du rayonnement du moyen de rayonnement (2) ou/et pour mesurer la longueur d'onde ou/et la gamme de longueurs d'onde du rayonnement émis par le moyen de rayonnement (2).

9. Dispositif selon l'une des revendications 1 à 8,
**caractérisé en ce que**
le dispositif (1) comprend, en plus du moyen de rayonnement (2), un organe (6) d'émission de lumière visible, de préférence de lumière blanche,
de préférence, le dispositif (1) étant conçu pour faire varier une intensité du rayonnement du moyen de rayonnement (2), indépendamment d'une intensité du rayonnement d'organe d'émission (6).

10. Dispositif selon l'une des revendications 1 à 9,
**caractérisé en ce que**
le dispositif est conçu comme une lampe pour l'inspection des surfaces de pièces, de préférence pour la détection d'impuretés, pour le contrôle par ressuage et/ou pour le contrôle par poudre magnétique fluorescente.

11. Procédé de fonctionnement d'un dispositif d'émission d'un rayonnement électromagnétique, en particulier d'un rayonnement UV, comprenant au moins un moyen de rayonnement (2) formé par au moins une diode électroluminescente émettant uniquement un rayonnement dans des longueurs d'onde non visibles, le dispositif (1) détectant des défauts de fonctionnement de la diode électroluminescente (2) au moyen d'un organe de détection (3),
**caractérisé en ce que**
le dispositif (1) ou au moins la diode électroluminescente (2) est automatiquement mis(e) hors service en cas de détection du défaut de fonctionnement par l'organe de détection (3).

12. Procédé selon la revendication 11,
**caractérisé en ce que**
le dispositif indique la présence d'un défaut de fonctionnement.

13. Utilisation du dispositif selon l'une des revendications 1 à 10 pour l'inspection, notamment visuelle, de surfaces de pièces.

14. Utilisation selon la revendication 13,
**caractérisée en ce que**
le dispositif est utilisé pour la détection d'impuretés, pour le contrôle par ressuage et/ou pour le contrôle par poudre magnétique fluorescente.
